# EUROPÄISCHE PATENTSCHRIFT

(11) **EP 3 038 966 B1**
(45) Veröffentlichungstag und Bekanntmachung des Hinweises auf die Patenterteilung: **13.09.2017**
(21) Anmeldenummer: 14744771.8
(22) Anmeldetag: 23.07.2014
(51) Int. Cl.: B66C 13/18, B66C 23/62, B66C 23/88, B66D 1/48, F16G 11/00, B66C 15/00

(54) **DRALLFÄNGER**
SWIVEL
ÉMERILLON

(30) Priorität: 28.08.2013 DE 102013014341; 18.10.2013 DE 102013017431
(43) Veröffentlichungstag der Anmeldung: 06.07.2016
(73) Patentinhaber: Liebherr-Components Biberach GmbH, 88400 Biberach an der Riß (DE)
(72) Erfinder: MUPENDE, llaka, 89231 Neu-Ulm (DE); ZERZA, Horst, 88400 Biberach an der Riß (DE)
(74) Vertreter: Thoma, Michael
(86) Internationale Anmeldenummer: PCT/EP2014/002019
(87) Internationale Veröffentlichungsnummer: WO 2015/028111

(56) Entgegenhaltungen:
- DE-A1- 3 937 631
- DE-U1-202005 009 235
- US-A- 2 353 479
- US-A1- 2011 011 818

## Beschreibung

Die vorliegende Erfindung betrifft einen Drallfänger zum Abbau von Drall eines Seiles, mit zwei Drallfängerteilen, die in Längsrichtung des Seils zueinander verdrehbar sind, wobei ein Drehantrieb zum Zwangsverdrehen der beiden Teile zueinander vorgesehen ist.

Seiltriebe beispielsweise von Kranen oder anderen Hebezeugen wie Aufzügen, bei denen ein zugkraftbelastetes Seil auf eine Seiltrommel aufgewickelt und/oder um Seilrollen umgelenkt wird, neigen zum Verdrallen des Seils, insbesondere wenn dieses aus Litzen geflochten bzw. gedreht ist. Der Drall des Seiles entsteht dabei unter anderem aufgrund mehrlagigen Wickelns auf der Seiltrommel sowie aufgrund von Momentendifferenzen zwischen den einzelnen Litzenlagen. Auch nicht exakt mit der Seillängsrichtung fluchtende Seilumlenkrollen können Drall induzieren. Das Seil neigt dann zu einer In-Sich-Verdrehung, d. h. zum Verdrehen um seine Längsachse, was einerseits zu erhöhtem Verschleiß am Seil selbst, andererseits aber auch zu einem Verdrehen des Lasthaken mit Seilumlenkrollen und entsprechenden Sicherheitsrisiken wegen erhöhten Seilverschleiß führen kann, bei Hebezeugen wie Kranen entsteht zudem das Problem, dass sich der Lasthaken verdrillt und die Seilstränge zusammenschlagen, die sich dann kreuzen und nicht mehr ohne weiteres entdrallen, was einen weiteren Betrieb nicht zulässt wegen erhöhtem Verschleiß.

Um eine solche Seiltorsion zu vermeiden, ist es bekannt, sogenannte Drallfänger in den Seiltrieb einzubauen, die bisweilen auch Seilwirbel genannt werden. Ein solcher Drallfänger bezeichnet regelmäßig eine unter Zug beanspruchbare Verbindung aus zwei Teilen, wobei ein Teil zum anderen in der Achse der Zugrichtung drehen kann. Die beiden Drallfängerteile sind also in Richtung der Seillängsachse, insbesondere um eine Drehachse koaxial zu besagter Seillängsachse zueinander verdrehbar, beispielsweise über eine Wälzlagerverbindung, wobei ein drehbarer Drehfängerteil mit dem Seil drehfest verbunden ist, während der andere, üblicherweise feststehende Drallfängerteil bezüglich einer Verdrehung um die Seillängsachse drehfest angelenkt ist, beispielsweise an einem Ausleger eines Krans, an dem das Seil über den genannten Drallfänger angeschlagen ist. Es wurde auch schon vorgeschlagen, einen solchen Drallfänger in ein Seil zu integrieren bzw. zwei Seilstücke durch einen solchen Drallfänger miteinander zu verbinden, vgl. DE 20 2005 009 235 U1, um bezüglich der zu entdrallenden Seilstücke flexibler zu werden. In letztgenanntem Fall gibt es keinen feststehend angeschlagenen Drallfängerteil, sondern jedes der Drallfängerteile ist mit einem Seilstück drehfest verbunden und insofern selbst drehbar.

Auch wenn solche Drallfänger beispielsweise durch die Verwendung von Wälzlagern leicht drehbar sind, d. h. eine Ausgleichsdrehung zwischen den beiden Drallfängerteilen ohne größeren Widerstand erfolgen kann, wird bisweilen doch eine vorbestimmte Drallstärke benötigt, um eine Ausgleichsdrehung einzuleiten. Andererseits kommt es bei eingescherten Seilverläufen mit größeren Seillängen, wie sie bei Turmdrehkranen mit Laufkatzen, aber auch anderen Kranen üblich sind, bisweilen dazu, dass der Drallabbau des Seils nicht über die entsprechenden Seilumlenkrollen der Einscherung weitergeleitet werden kann. Um auch schon kleinere Verdrallungen des Seils abbauen zu können, wurde daher bereits vorgeschlagen, einen solchen Drallfänger mit einem Drehantrieb zu versehen, mithilfe dessen die beiden Drallfängerteile relativ zueinander zwangsverdreht werden können, vgl. DE 39 37 631 A1. Da sich der Drall des Seils üblicherweise in Verdrehung des Lasthaken mit den Umlenkrollen niederschlägt, kann der Kranführer die Winkelstellung des Lasthaken überwachen und den Drehantrieb des Drallfängers betätigen, sobald er eine Verdrehung des losen Lasthaken mit Umlenkrolle erkennt.

Das Erkennen einer schiefen Winkelstellung des losen Lasthaken ist jedoch nicht immer ganz einfach. Dies gilt grundsätzlich auch für Stahlseile, die relativ hohe Torsionskräfte übertragen und insofern der Lasthaken relativ schnell verdrehen kann. In besonderem Maße aber für hochfeste Faserseile aus Kunstfasern wie beispielsweise Aramidfasern (HMPA), Aramid-Kohlefasergemischen, hochmodulare Polyethylen-Fasern (HMPE) oder Poly(p-phenylene-2,6-benzobisoxazole)-Fasern (PBO). Solche Faserseile haben eine deutlich geringere Drehsteifigkeit als Stahlseile, so dass Seiltorsion nicht in gleichem Maße zu einem Verdrehen der losen Lasthaken mit Seilrollen führt und insofern schwieriger zu erkennen ist. Wie ein Stahlseil wird jedoch auch ein solches Faserseil im Seiltrieb verdreht, was verstärkt zu Seilschäden wie zum Beispiel Buckelbildung führt, die sich besonders zum Seilende hin ausbildet.

Hiervon ausgehend liegt der vorliegenden Erfindung die Aufgabe zugrunde, einen verbesserten Drallfänger der genannten Art zu schaffen, der Nachteile des Standes der Technik vermeidet und letzteren in vorteilhafter Weise weiterbildet. Insbesondere soll auch einer geringeren Drallbildung schneller abgeholfen werden und Drall an Seilen mit geringerer Drehsteifigkeit besser entgegengewirkt werden.

Erfindungsgemäß wird diese Aufgabe durch einen Drallfänger gemäß Anspruch 1 sowie einen Kran gemäß Anspruch 14 gelöst. Bevorzugte Ausgestaltungen der Erfindung sind Gegenstand der abhängigen Ansprüche.

Es wird also vorgeschlagen, den Drehantrieb des Drallfängers nicht mehr erst bei einem Verdrehen der losen Seilumlenkrollen im Lasthaken zu betätigen, sondern einen etwaigen Seildrall direkt am Drallfänger zu erfassen und den Drehantrieb in Gang zu setzen, sobald Drallkräfte bzw. -drehmomente vom Seil her auf den Drallfänger einwirken bzw. diese Drallkräfte bzw. -momente eine gewisse Größe erreichen. Hierzu wird an dem Drallfänger eine Sensorik vorgesehen, die Wirkungen des Seildralls auf den Drallfänger erfasst, so dass die Zwangsverdrehung der Drallfängerteile sehr viel präziser gesteuert werden kann. Erfindungsgemäß ist an dem Drallfänger zumindest ein Drehrichtungsmesser zum Erfassen der Drallrichtung des Seils gegenüber dem Drallfänger vorgesehen, wobei der Drehantrieb von einer Steuervorrichtung in Abhängigkeit der bestimmten Drallrichtung ansteuerbar ist derart, dass der mit dem Seil verbundene Drallfängerteil in die Richtung der erfassten Drallrichtung verdreht wird. Durch ein solches Nachdrehen des drehbaren Drallfängerteils gemäß der erfassten Seildrallrichtung, so dass das Drallfängerteil dem Seildrall folgt, wird der Seildrall verringert, und gegebenenfalls vollständig abgebaut. Durch die Drallerfassung am Drallfänger selbst können auch geringere Seilverdrehungen abgebaut bzw. auch wenig drehsteife Seile wie Faserseile weitgehend drallfrei gehalten werden, so dass eine deutlich höhere Lebensdauer durch geringeren Verschleiß erreicht werden kann.

In vorteilhafter Weiterbildung der Erfindung kann die am Drallfänger vorgesehene Sensorik nicht nur einen Drehrichtungssensor, sondern auch einen Drehmomentmesser zum Bestimmen der vom Seildrall am Drallfänger induzierten Drehmoments umfassen. Eine solche quantitative Bestimmung des Seildralls bzw. dessen Wirkungen auf den Drallfänger der Größe nach ermöglicht eine noch präzisere Ansteuerung des Drehantriebs als dies mit einer Drallbestimmung nur dem Vorzeichen nach möglich ist. Insbesondere kann der vom Drehantrieb auszuführende Drehwinkel bzw. die auszuführende Drehzahl der Größe nach an die Höhe des erfassten Drallmoments angepasst werden, vorzugsweise derart, dass der Drallfänger gleich ein größeres Stück weit verdreht wird, wenn ein größerer Drall bzw. ein größeres Drehmoment erfasst wird, während nur eine kleinere Drehbewegung ausgeführt wird, wenn ein kleineres Drehmoment erfasst wird. Die Abhängigkeit zwischen Größe des Drehmoments und Größe des Drehwinkels ist jedoch nicht zwingend und kann, wenn sie vorgesehen wird, an das jeweils verwendete Seil angepasst werden, beispielsweise dergestalt, dass die Drehsteifigkeit des jeweils verwendeten Seils berücksichtigt wird. Wird beispielsweise ein Stahlseil mit hoher Drehsteifigkeit verwendet, kann auch bei höheren am Drallfänger induzierten Drehmomenten eine kleinere Drehbewegung des Drallfängers ausreichen, um den Seildrall zu beseitigen. Wird indes ein hochfestes Faserseil verwendet, das eine relativ niedrige Drehsteifigkeit besitzt, kann bei einem entsprechenden Drehmoment, das am Drallfänger erfasst wird, eine - im Vergleich zum Stahlseil - größere Drehbewegung des Drallfängers initiiert werden.

Die Bestimmung der Drehrichtung und/oder der Größe des Seildralls kann grundsätzlich an verschiedener Stelle am Drallfänger erfolgen. Gemäß einer vorteilhaften Ausführung der Erfindung kann der Drehrichtungsmesser und/oder der Drehmomentmesser zwischen einem der beiden Drallfängerteile und dem Drehantrieb vorgesehen sein, um eine Lagerreaktion auf den Seildrall am Drehantriebslager, insbesondere eine vom Seildrall induzierte Verdrehung des Drehantriebs gegenüber dem genannten Drallfängerteil bzw. die Neigung hierzu hinsichtlich Richtung und gegebenenfalls Größe zu erfassen. Insbesondere kann der Drehrichtungsmesser und/oder der Drehmomentmesser einer Drehmomentstütze zugeordnet sein, mithilfe derer der Drehantrieb gegenüber einer Anschlagskontur an dem genannten Drallfängerteil gegenüber Verdrehen abgefangen wird. Ist der Drallfänger drehfest montiert, beispielsweise um ein Kranhubseil an einem Kranausleger anzuschlagen, kann der Drehrichtungsmesser und/oder der Drehmomentsensor zwischen einem Drehantriebsgehäuseteil und einer Anschlagskontur an dem feststehenden Drallfängerteil vorgesehen sein.

Alternativ oder zusätzlich kann der Drehrichtungsmesser und/oder der Drehmomentmesser auch ein Sensorelement zwischen einem Anschlussstück, mit dem das Seil an dem drehbaren Drallfängerteil angeschlossen wird, und dem genannten drehbaren Drallfängerteil aufweisen. Weiter alternativ oder zusätzlich kann ein solches Sensorelement auch im Antriebsstrang des Drehantriebs integriert sein, beispielsweise zwischen zwei Getriebeelementen eines zwischengeschalteten Getriebes.

Wird der Drehantrieb in der vorgenannten Weise mittels einer Drehmomentstütze an einem Drallfängerteil gegen Verdrehung abgestützt, können in Weiterbildung der Erfindung der zumindest einen Drehmomentstütze des Drehantriebs - oder gegebenenfalls auch mehreren Drehmomentstützen - zumindest zwei Anschlagkonturen zugeordnet sein, die mit dem Drallfängerteil fest verbunden sind, um die Drehmomentstütze und damit den Drehantrieb in beide, d. h. entgegengesetzte mögliche Drehrichtungen zu sichern bzw. abzustützen. Vorteilhafterweise können dabei die beiden Anschlagkonturen relativ zu der zumindest einen Drehmomentstütze so angeordnet sein, dass der Drehantrieb rotatorisches Spiel gegenüber dem Drallfängerteil hat, also zumindest ein kleines Stück weit gegenüber dem Drallfänger verdreht werden kann.

In vorteilhafter Weiterbildung der Erfindung kann jedem der Anschlagteile bzw. jeder Anschlagkontur ein Sensorelement zugeordnet sein, um die Drehrichtung und/oder das Drehmoment quantitativ zu erfassen, wenn die Drehmomentstütze an einem jeweiligen Anschlagteil ansteht. Steht die Drehmomentstütze an dem einen Anschlagteil an, signalisiert dies eine erste Drehrichtung des Seildralls, während ein Anstehen der Drehmomentstütze an der anderen Anschlagkontur die entgegengesetzte Drehrichtung anzeigt. Der Kontaktdruck der Drehmomentstütze gegen die Anschlagkontur kann dabei als Maß für die Größe des induzierten Drehmoments angesehen werden.

Um die Drehrichtung des Dralls und gegebenenfalls auch dessen Größe im Sinne eines Drehmomentbetrags in einfacher Weise zwischen Drallfängerteil und Drehantriebsgehäuse erfassen zu können, ist es vorteilhaft, wenn der Drehantrieb nicht selbsthemmend ausgebildet ist bzw. mit einer Bremseinrichtung blockiert oder zumindest soweit gebremst werden kann, dass das vom Seildrall induzierte Drehmoment in eine Verdrehung des Antriebsgehäuses umgesetzt werden kann. Eine Bremseinrichtung kann eine vorgespannte Reibbremse beispielsweise in Form einer Lamellenbremse aufweisen, die beim Inbetriebsetzen des Drehantriebs gelüftet wird.

Ist der Drehantrieb in der vorgenannten Weise zumindest begrenzt gegenüber dem Drallfängerteil gelagert, beispielsweise mittels einer Drehmomentstütze zwischen zwei Anschlagteilen, deren Beabstandung die Dicke der Drehmomentstütze übersteigt, kann in Weiterbildung der Erfindung zwischen dem Drallfängerteil und dem verdrehbar gelagerten Antriebsgehäuseteil eine Bremsvorrichtung zum Bremsen der Verdrehung des Antriebsgehäuses gegenüber dem Drallfängerteil und/oder eine elastische Rückstellvorrichtung zum Aufbringen einer Rückstellkraft vorgesehen sein, die versucht, das Antriebsgehäuse gegenüber dem Drallfängerteil in einer Ausgangsstellung zurückzuhalten, die allerdings dann vom Seildrall überwunden werden kann. Durch eine solche Brems- und/oder Rückhaltevorrichtung wird ein instabiles, übersensibles oder gar unkontrolliertes Hin- und Herdrehen des Drehantriebs gegenüber dem Drallfängerteil, insbesondere dem stationären Drallfängerteil vermieden, was zu einem unerwünschten Signalflackern des Drehrichtungsmessers und/oder des Drehmomentmessers führen würde.

Die genannte Brems- und/oder Rückstellvorrichtung kann beispielsweise eine Federreinrichtung umfassen, die die Drehmomentstütze oder ein anderes rotatorisch wirksames Abstützteil des Drehantriebs in eine vorbestimmte Stellung zu bringen versucht.

Die Erfindung wird nachfolgend anhand eines bevorzugten Ausführungsbeispiels und zugehörigen Zeichnungen näher erläutert. In den Zeichnungen zeigen:
- Fig. 1:: eine schematische Darstellung eines erfindungsgemäßen Hebezeugs in Form eines Turmdrehkrans nach einer vorteilhaften Ausführung der Erfindung, dessen Hubseil und/oder dessen Abspannseile für den wippbaren Ausleger als Faserseile ausgebildet sein können, wobei die ein Drallfänger das Ende eines von einer Seiltrommel ablaufenden und über eine Laufkatze geführten Hubseils am Ausleger des Krans anschlägt,
- Fig. 2:: eine schematische Darstellung eines erfindungsgemäßen Hebezeugs in Form eines Turmdrehkrans nach einer weiteren vorteilhaften Ausführung der Erfindung, dessen Ausleger wippbar ist, wobei das von einer Seiltrommel ablaufende Hubseil über die Auslegerspitze abläuft und ein Drallfänger das Seilende am Auslegerende anschlägt,
- Fig. 3:: eine schematische Darstellung des in den Seiltrieb des Hubseils des Krans aus Fig. 1 integrierten Drallfängers in einem Längsschnitt, der den Drehantrieb des Drallfängers zeigt,
- Fig. 4:: einen Querschnitt durch den Drehantrieb des Drallfängers aus Fig. 3 entlang der Linie A - B, wobei die Drehmomentabstützung und der dem Drehantrieb zugewandte Drehmomentmesser gezeigt wird,
- Fig. 5:: einen Längsschnitt des in den Seiltrieb des Krans aus Fig. 1 integrierten Drallfängers nach einer weiteren Ausführung der Erfindung, gemäß der die Sensorik mit mehreren Drehmomentsensorvarianten ausgebildet und mit einem Drehwinkelsensor ergänzt ist, ansonsten im Wesentlichen der Ausführung nach Fig. 3 entspricht, und
- Fig. 6:: einen Querschnitt durch den Drehantrieb des Drallfängers aus Fig. 5 entlang der dort eingetragenen Linie A - B, wobei die Drehmomentabstützung des Drehantriebs und der dieser zugeordnete Drehmomentmesser gezeigt ist.

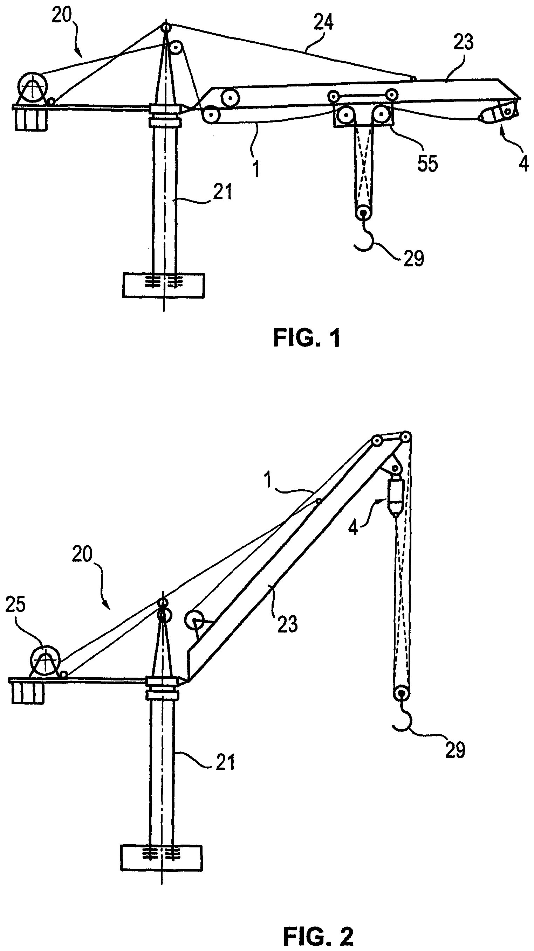

Fig. 1 zeigt beispielhaft für ein Hebezeug nach einer vorteilhaften Ausführung der Erfindung einen Kran in Form eines oben drehenden Turmdrehkrans 20, dessen Turm 21 auf einem Wagen oder einer feststehenden Basis gelagert ist. An dem Turm 21 ist in an sich bekannter Weise ein Ausleger 23 angelenkt und über eine Abspannung 24 abgespannt. Die genannte Abspannung 24 kann starr, beispielsweise in Form von Abspannstangen ausgebildet sein, aber auch verstellbar in Form einer Abspannverteilung ausgebildet sein, die über eine Abspannseilwinde 25 in ihrer Länge veränderbar sein kann, so dass der Ausleger 23 in seinem Anstellwinkel verändert werden kann, wie dies Fig. 2 zeigt.

Wie Fig. 1 zeigt, kann der Turmdrehkran 20 dabei mit einem Laufkatzenausleger versehen sein. An dem vorgenannten in der Betriebsstellung liegend, insbesondere horizontal ausgerichteten Ausleger 23 ist eine Laufkatze 55 verfahrbar gelagert, wobei die genannte Laufkatze 55 beispielsweise mittels eines Laufkatzenseils verfahren werden kann, das über Umlenkrollen an der Auslegerspitze geführt sein kann.

Ferner umfasst der Turmdrehkran ein Hubseil 1, das über Umlenkrollen an der Auslegerspitze von der Spitze des Auslegers herabgelassen werden kann und dort mit einem Kranhaken 29 verbunden ist, wie dies Fig. 2 zeigt, oder in der Ausführung nach Fig. 1 über die besagte verfahrbare Laufkatze 55 und dort vorgesehene Umlenkrollen ablaufen und mit dem Kranhaken 29 verbunden sein kann. Das genannte Hubseil 1 läuft in beiden Fällen auf eine Hubwinde 30 auf.

Das genannte Hubseil 1 und/oder das Abspannseil können hierbei als Faserseil ausgebildet sein, das aus Kunstfasern wie beispielsweise Aramidfasern oder einem Aramid-/Kohlefasergemisch bestehen kann.

In beiden Fällen kann das genannte Hubseil 1 und/oder das Abspannseil mittels eines Drallfängers 4 an dem Ausleger 23 des Krans oder gegebenenfalls einem anderen Kranstrukturteil angeschlagen sein.

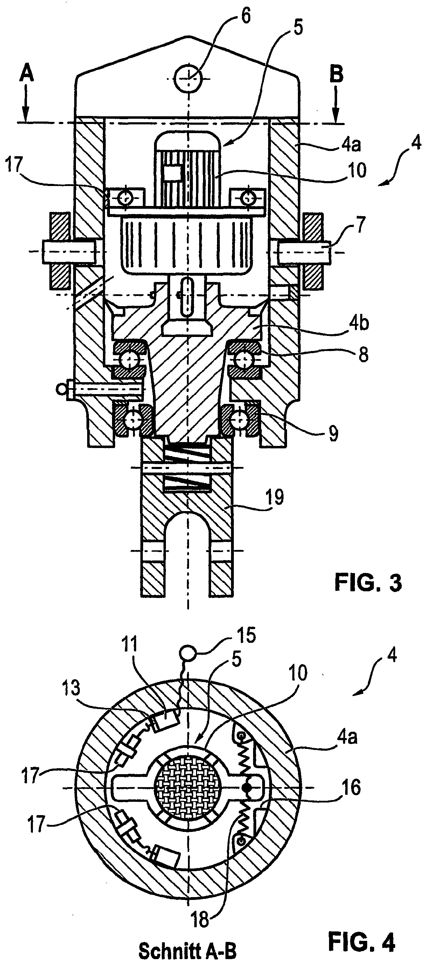

Wie die Fig. 3 und 4 zeigen, umfasst der genannte Drallfänger 4 zwei Drallfängerteile 4a und 4b, die relativ zueinander in Seillängsrichtung verdrehbar sind. Der Drallfängerteil 4a bildet dabei einen feststehenden bzw. drehfesten Drallfängerteil, der bezüglich der Seillängsrichtung drehfest am Ausleger 23 gelagert ist. Hierbei kann eine pendelnde, hängende bzw. aufrechte Anordnung über eine erste Lagerachse 6 oder eine liegende, ebenfalls pendelnde Anordnung über die zweite Lagerachse 7 vorgesehen sein, die Pendel- bzw. Schwenkbewegungen quer zur Seillängsrichtung zulassen, eine Verdrehung des Drallfängerteils 4a in Seillängsrichtung jedoch unterbinden.

Der andere Drallfängerteil 4b bildet den verdrehbaren Drallfängerteil, an dem das Seil 1 drehfest befestigt ist. Der genannte drehbare Drallfängerteil 4b kann beispielsweise über Wälzlager, beispielsweise in Form eines Axiallagers 8 und eines Radiallagers 9 am feststehenden Drallfängerteil 4a um die Seillängsrichtung drehbar gelagert sein.

Der drehbare Drallfängerteil 4b kann vorteilhafterweise mit einem Drehantrieb 5 verbunden sein, der vorteilhafterweise im Inneren des Drallfängers 4 untergebracht sein kann. Hierfür kann beispielsweise der feststehende Drallfängerteil 4a glocken- oder hülsenförmig ausgebildet sein, um einen Aufnahmeraum für den Drehantrieb 5 zu schaffen. Eine umgekehrte Ausbildung mit glockenförmiger bzw. hülsenförmiger Konturierung des drehbaren Drallfängerteils 4b, der dann den feststehenden Drallfängerteil 4a umschließen könnte, kann jedoch ebenfalls vorgesehen sein.

Der genannte Drehantrieb 5 kann beispielsweise einen Elektromotor umfassen, der optional über ein Getriebe oder auch direkt mit einer Ausgangswelle drehfest mit dem drehbaren Drallfängerteil 4b verbunden ist. Ein Antriebsgehäuse 10 des Drehantriebs 5 kann gegen Verdrehung an dem feststehenden Drallfängerteil 4a gesichert sein, beispielsweise mittels einer oder mehrerer Drehmomentstützen 14, die über Anschläge oder andere geeignete Lagerkonturen an dem Drallfängerteil 4a abgestützt sein können, vgl. Fig. 4.

Wie die Figuren 3 und 4 zeigen, ist der Drallfänger 4 über den genannten Drehantrieb 5 hinaus messtechnisch ausgerüstet, um den Verdrehwinkel der beiden Drallfängerteile 4a und 4b bei einer Relativverdrehung zueinander sowie das für eine Verdrehung der beiden Drallfängerteile 4a und 4b notwendige Drehmoment und auch die jeweilige Drehrichtung zu erfassen.

Wie insbesondere Fig. 4 zeigt, kann der Drehantrieb 5 einschließlich seines Antriebsgehäuses 10 in dem feststehenden Drallfängerteil 4a ein Stück weit verdrehbar aufgenommen sein, wobei die Verdrehbarkeit durch eine Drehmomentstütze 14, die vom Antriebsgehäuse 10 nach außen zur Umfangswandung des Drallfängers 4a auskragt begrenzt bzw. abgefangen wird. Hierzu sind an dem genannten Drallfängerteil 4a bzw. dessen Umfangswandung Anschlagteile bzw. Anschlagkonturen 16 vorgesehen, die bei einer Verdrehung des Drehantriebs 5 der Drehmomentstütze 14 im Weg stehen und mit dieser kollidieren und so die Verdrehung begrenzen. Die genannten Anschlusskonturen 16 können integral einstöckig an dem Drallfängerteil 4a angeformt oder separat daran befestigt sein, beispielsweise in Form von angeschraubten oder angeschweißten Klötzen.

Wie Fig. 4 zeigt, können dabei prinzipiell auch zwei Drehmomentstützen 14 vorgesehen sein, die jeweils zwischen einem Paar solcher Anschlagkonturen 16 angeordnet sind. Um die Verdrehbarkeit zu gewährleisten, ist der Abstand zweier Anschlagkonturen 16 voneinander größer als die Dicke der dazwischen aufgenommenen Drehmomentstütze 14.

Wie insbesondere Fig. 4 zeigt, sind zwei Anschlagskonturen 16 Sensorelemente 17 zugeordnet, die die Annäherung und/oder den Kontakt und/oder das Anstehen der Drehmomentstütze 14 an der jeweiligen Anschlagkontur 16 erfassen. Die beiden Sensorelemente 17 können dabei taktil arbeiten, beispielsweise in Form eines federbeaufschlagten Tasters, oder auch berührungslos nach einem geeigneten Messprinzip. Die beiden Sensorelemente 17 bilden dabei zusammen einen Drehrichtungsmesser 13, mit dem die Drehrichtung des Dralls des Seils 1 bestimmt werden kann. Geht der Seildrall in die eine Richtung, wird die Drehmomentstütze 14 auf die eine Anschlagkontur zugedreht, während bei entgegengesetztem Seildrall die Drehmomentstütze 14 gegen die andere Anschlagkontur fährt.

Das Signal dieses Drehrichtungsmessers 13 wird von der Steuervorrichtung 15 ausgewertet bzw. dazu verwendet, den Drehantrieb 5 in Gang zu setzen, um je nach festgestellter Drehrichtung des Seildralls den Drehantrieb in die eine Richtung oder in die andere Richtung zu betätigen und eine entsprechende Zwangsverdrehung des Drallfängerteils 4b herbeizuführen, so dass dieses dem Drall des Seils 1 hinterhergeführt wird. Dieses Nachführen des drehbaren Drallfängerteils 4b kann ein iterativer Prozess sein, insbesondere dergestalt, dass bei Ausbleiben des Signals des Drehrichtungssensors die Drehbewegung gestoppt wird, bis der Seildrall die Drehmomentstütze 14 erneut gegen die jeweilige Anschlagkontur 16 drückt.

Die genannten Sensorelemente 17 und/oder weitere Sensorelemente an den genannten Anschlagkonturen können dabei auch derart ausgebildet sein, dass sie den Anlage- bzw. Anpressdruck der Drehmomentstütze 4 gegen die jeweilige Anschlagkontur 16 erfassen, wobei hier in der genannten Weise federgespannte, taktile Sensorelemente oder andere geeignete Drucksensoren Verwendung finden können. Dieser Anlagedruck ist ein Maß für die Größe des Drehmoments, das vom Seildrall induziert wird, und somit ein Maß für den Seildrall selbst. In der zuvor beschriebenen Weise kann die Steuervorrichtung 15 die Größe des Seildralls dahingehend berücksichtigen, den Stellweg, d. h. den Verdrehwinkel, der durch die Betätigung des Drehantriebs 5 erzeugt wird, der Größe nach zu verändern bzw. an die Größe des Drehmoments anzupassen, insbesondere dahingehend, dass bei größerem induziertem Drehmoment ein größerer Drehwinkel ausgeführt wird als bei einem erfassten kleineren Drehmoment. Wie eingangs erläutert, kann hierbei die Seildrehsteifigkeit des jeweils verwendeten Seils Berücksichtigung finden.

Um ein Signalzittern bzw. ein unkontrolliertes Hin- und Herdrehen der Drehmomentstütze 14 zwischen den Anschlagteilen 16 zu vermeiden, kann der Drehantrieb 5 mittels einer Bremseinrichtung bzw. einer Rückhalte- und/oder Rückholeinrichtung in eine Ausgangsstellung gehalten werden, aus der sich die Drehmomentstütze 14 erst herausbewegt, wenn das vom Seildrall induzierte Drehmoment eine gewisse Größe bzw. einen Schwellwert übersteigt. Eine solche Brems- bzw. Rückhol- oder Rückhalteeinrichtung kann beispielsweise durch eine Federeinrichtung 18 realisiert sein, die einerseits am Drallfängerteil 4a und andererseits an der Drehmomentstütze 14 angelenkt sein kann, vgl. Fig. 4. Hat das Seil eine bevorzugte Drallrichtung, kann eine Feder bzw. eine in nur einer Richtung wirksame Brems- bzw. Rückhaltevorrichtung vorgesehen sein, während Fig. 4 eine zweiseitig wirksame Rückholeinrichtung zeigt, bei der die Richtung des Seildralls ohne Bedeutung ist.

Die Sensorsignale können per Kabel, vorzugsweise aber auch drahtlos an die genannte Steuervorrichtung 15 übertragen werden.

Die genannte Steuervorrichtung 15 kann dabei vollautomatisch arbeitend ausgebildet sein, dergestalt, dass sie den Drehantrieb 5 in Abhängigkeit des Signals des Drehrichtungsmessers 13 und/oder des Drehmomentmessers 11 selbsttätig und automatisch betätigt. Alternativ kann auch eine halbautomatisch arbeitende Arbeitsweise der Steuervorrichtung vorgesehen sein, dergestalt, dass ein Sensorsignal des Drehrichtungssensors 13 und/oder des Drehmomentmessers 11 zunächst einem Maschinenführer angezeigt wird, der dann durch Betätigung eines Eingabeelements wie beispielsweise einer Taste den Drehantrieb 5 in Gang setzen und die Zwangsverdrehung der Drallfängerteile 4a und 4b veranlassen kann, die dann von der Steuervorrichtung 15 überwacht und gegebenenfalls beendet und/oder in Abhängigkeit der Betätigung des Eingabeelements gesteuert sein können.

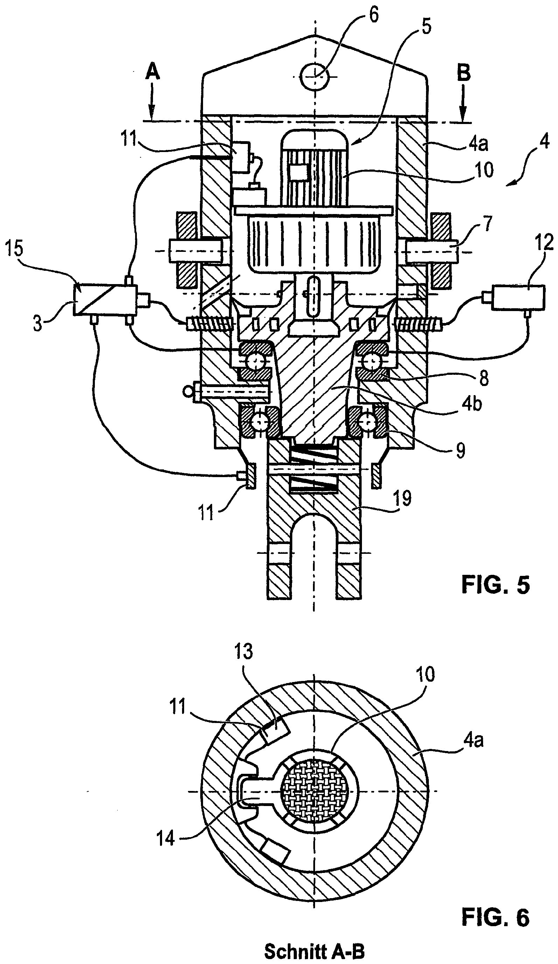

Die Fig. 5 und 6 zeigen eine grundsätzlich ähnliche Ausführung eines Drallfängers 4, die in wesentlichen Teilen der Ausführung nach den Fig. 3 und 4 entspricht, so dass wir insofern auf die vorangehende Beschreibung verweisen möchten.

Im Wesentlichen unterscheidet sich der Drallfänger nach den Fig. 5 und 6 von der Ausführung nach den Fig. 3 und 4 durch die Ausbildung der Sensorik. Zum einen ist zusätzlich zu dem Drehrichtungsmesser 13 und dem Drehmomentmesser 11 ein Stellwinkelmesser 12 vorgesehen, der die Verdrehung der beiden Drallfängerteile 4a und 4b zueinander quantitativ erfasst. Zum anderen ist die Drehmomentstütze 14 zwischen zwei Anschlagskonturen 16 im Wesentlichen spielfrei oder nur mit relativ geringem Spiel gefangen, so dass keine signifikante Verdrehung des Drehantriebs 5 gegenüber dem feststehenden Drallfängerteil 4a möglich ist, wobei die Ausbildung des Drehmomentmessers 11 sowie des Drehrichtungssensors 13 abweichen kann.

Die genannten Stellwinkelmesser 12, Drehmomentmesser 11 und Drehrichtungsmesser 13 können grundsätzlich verschieden ausgebildet sein und beispielsweise Betriebsgrößenmesser zur Bestimmung von Betriebsgrößen des Antriebsmotors des Drehantriebs 5 umfassen. Beispielsweise kann das Drehmoment aus den Betriebsgrößen Strom und Spannung des Antriebsmotors bestimmt werden. Alternativ oder zusätzlich kann der Drehmomentmesser 11 der zuvor genannten Drehmomentstütze 14 des Drehantriebs 5 gegenüber dem Drallfängerteil 4a zugeordnet sein, um das Drehmoment zu erfassen und dem Steuergerät 15 zur Verfügung zu stellen. Auch der genannte Drehrichtungssensor 13 kann der Drehmomentstütze 14 zugeordnet sein, beispielsweise mit dem genannten Drehmomentmesser 11 zu einer Erfassungseinheit zusammengefasst sein, die den Druck der Drehmomentstütze gegen die Anschlagskontur am Drallfängerteil 4a erfasst.

Alternativ oder zusätzlich kann der Drehmomentmesser 11 und/oder der Drehrichtungsmesser 13 auch in ein Anschlussteil 19 integriert sein bzw. diesem Anschlussteil 16 zugeordnet sein, mit dem das Seil 1 an den drehbaren Drallfängerteil 4b angeschlossen wird.

Der Stellwinkelmesser 12 bzw. ein entsprechender Drehzahlsensor kann beispielsweise an einer Schnittstelle zwischen den beiden Drallfängerteilen 4a und 4b angeordnet sein, um unmittelbar die Verdrehung der beiden Drallfängerteile zueinander zu erfassen. Alternativ oder zusätzlich kann auch ein Stellwinkelmesser 12 dem Drehantrieb 5 zugeordnet sein, oder an einer Getriebewelle bzw. der Ausgangswelle des Drehantriebs 5 angeordnet sein.

Mithilfe des genannten zusätzlichen Drehwinkelmessers 12 kann insbesondere die Drehsteifigkeit des Seils 1 bestimmt und/oder überwacht werden, indem der bei einem bestimmten Drehmoment des Antriebsmotors sich einstellende Drehwinkel oder umgekehrt das für einen vorbestimmten Verdrillwinkel benötigte Drehmoment erfasst wird. Die solchermaßen bestimmte Seildrehsteifigkeit kann beispielsweise in der vorgenannten Weise dann berücksichtigt werden, um die Betätigung des Drehantriebs 5 zum Einstellen einer entdrillten Seilkonfiguration an die Seildrehsteifigkeit anzupassen.

## Patentansprüche

1. Drallfänger zum Abbau von Drall eines Seils (1), mit zwei Drallfängerteilen (4a, 4b), die in Längsrichtung des Seils (1) zueinander verdrehbar sind und Zugkräfte übertragen, wobei ein Drehantrieb (5) zum Zwangsverdrehen der beiden Drallfängerteile (4a, 4b) zueinander vorgesehen ist, **dadurch gekennzeichnet, dass** an dem Drallfänger (4) zumindest ein Drehrichtungsmesser (13) zum Bestimmen der Drallrichtung des Seils (1) gegenüber dem Drallfänger (4) vorgesehen ist und der Drehantrieb (5) von einer Steuervorrichtung (15) in Abhängigkeit der bestimmten Drallrichtung ansteuerbar ist derart, dass der mit dem Seil (1) drehfest verbundene Drallfängerteil (4b) in die Richtung der bestimmten Drallrichtung verdreht wird.

2. Drallfänger nach dem vorhergehenden Anspruch, wobei ein Drehmomentmesser (11) zum Bestimmen des vom Seildrall am Drallfänger (4) induzierten Drehmoments vorgesehen ist und der Drehantrieb (5) von der Steuervorrichtung (15) in Abbhängigkeit des bestimmten Drehmoments ansteuerbar ist, insbesondere derart, dass das bestimmte Drehmoment durch die Zwangsverdrehung der Drallfängerteile (4a, 4b) gegen Null gebracht wird.

3. Drallfänger nach dem vorhergehenden Anspruch, wobei die Steuervorrichtung (15) derart ausgebildet ist, dass mit zunehmend größerem Drehmoment eine zunehmend größere Zwangsverdrehung der Drallfängerteile (4a, 4b) relativ zueinander vorgenommen wird, wobei vorzugsweise die Seildrehsteifigkeit des jeweils montierten Seils 1 bei der Bestimmung der Größe der vorzunehmenden Zwangsverdrehung berücksichtigt wird.

4. Drallfänger nach einem der vorhergehenden Ansprüche, wobei der Drehantrieb einerseits mit einem Abtriebselement drehfest mit einem der Drallfängerteile (4b) verbunden und andererseits mittels zumindest einer Drehmomentstütze (14) an zumindest einer Anschlagskontur (16) an dem anderen Drallfängerteil (4a) gegen Verdrehen abstützbar ist, wobei der Drehrichtungsmesser (13) und/oder der Drehmomentmesser (11) der genannten Drehmomentstütze (14) und/oder der genannten Anschlagkontur (16) zugeordnet ist.

5. Drallfänger nach einem der Ansprüche 1 bis 3, wobei der Drehrichtungsmesser (13) und/oder der Drehmomentmesser (11) in einen Antriebsstrang des Drehantriebs integriert oder zwischen einem Anschlussstück (19), mit dem das Seil (1) mit einem der Drallfängerteile (4b) drehfest verbindbar ist, und dem genannten Drallfängerteil (4b) angeordnet ist.

6. Drallfänger nach einem der vorhergehenden Ansprüche, wobei der Drehantrieb (5) mittels der zumindest einen Drehmomentstütze (14) an zumindest zwei Anschlagskonturen (16) gegen Verdrehen in entgegengesetzte Drehrichtungen abstützbar ist und der Drehrichtungsmesser (13) und/oder der Drehmomentmesser (11) für jede der Anschlagskonturen (16) ein Sensorelement aufweist.

7. Drallfänger nach einem der vorhergehenden Ansprüche, wobei der Drehantrieb (5) von einer Bremsvorrichtung festsetzbar ist, so dass ein vom Seildrall in die Abtriebsseite des Drehantriebs (5) eingeleitetes Drehmoment auf die Eingangsseite des Drehantriebs (5) übertragbar und/oder in eine Drehbewegung der Eingangsseite des Drehantriebs (5) umsetzbar ist.

8. Drallfänger nach einem der vorhergehenden Ansprüche, wobei der Drehantrieb (5) mit einem Antriebsgehäuse gegenüber einem insbesondere feststehend angeordneten Drallfängerteil (4a) zumindest begrenzt verdrehbar gelagert ist, wobei zwischen dem Antriebsgehäuse und dem Drallfängerteil (4a) eine Bremsvorrichtung zum Bremsen der Verdrehung des Antriebsgehäuses gegenüber dem Drallfängerteil (4a) und/oder eine elastische Rückstellvorrichtung zum Aufbringen einer Rückstellkraft, die das Antriebsgehäuse in eine unverdrehte Ausgangsstellung gegenüber dem Drallfängerteil (4a) rückzustellen versucht, vorgesehen ist.

9. Drallfänger nach dem vorhergehenden Anspruch, wobei die Brems- und/oder Rückstellvorrichtung eine Federeinrichtung (17) umfasst.

10. Drallfänger nach einem der vorhergehenden Ansprüche, wobei der Drehantrieb (5) in den Drallfänger (4) integriert, insbesondere in einem von einem Drallfängerteil (4a) umschlossenen Innenraum angeordnet ist.

11. Drallfänger nach einem der vorhergehenden Ansprüche, wobei die Steuervorrichtung (15) einen Drallkompensierer zum automatischen Kompensieren eines gegebenenfalls vorhandenen Seildralls umfasst, wobei der genannte Drallkompensierer einen Steuerungsbaustein zum automatischen Ansteuern des Drehantriebs (5) in Abhängigkeit der von dem Drehrichtungsmesser (13) bestimmten Drehrichtung des vom Seil (1) auf den Drallfänger (4) wirkenden Seildralls und/oder in Abhängigkeit des von dem Drehmomentmesser (11) bestimmten Drehmoments an dem Drallfänger (4) umfasst, wobei der genannte Steuerungsbaustein derart ausgebildet ist, dass der Drehantrieb (5) derart betätigt wird, dass das vom Drehmomentmesser (11) erfasste Drehmoment durch die Zwangsverdrehung des Drallfängers gegen Null gebracht wird und/oder ein vom Drehrichtungsmesser (13) abgebbares Drehrichtungssignal ausbleibt.

12. Drallfänger nach einem der vorhergehenden Ansprüche, wobei der Drehrichtungsmesser (13) und/oder der Drehmomentmesser (11) in den Drallfänger (4) und/oder den Drehantrieb (5) integriert, insbesondere in einem von einem Drallfängerteil (4a) umschlossenem Innenraum angeordnet sind.

13. Drallfänger nach einem der vorhergehenden Ansprüche, wobei ein Drehwinkelmesser (12) zum Bestimmen des Verdrehwinkels zwischen den beiden Drallfängerteilen (4a), (4b) vorgesehen ist.

14. Kran, insbesondere Turmdrehkran, Mobilkran, Hafenmobilkran, Schiffskran oder Fahrzeugauslegerkran, mit einem Drallfänger (4) gemäß einem der vorhergehenden Ansprüche.

15. Kran nach dem vorhergehenden Anspruch, wobei mit dem Drallfänger (4) ein Hubseil des Krans an einem Ausleger (23) des Krans angeschlagen ist, wobei eines der Drallfängerteile (4a) drehfest an dem Ausleger (23) befestigt ist.

## Claims

1. A swivel for the reduction of twist of a rope (1), having two swivel parts (4a, 4b) which are rotatable with respect to one another in the longitudinal direction of the rope (1) and which transmit tensile forces, wherein a rotary drive (5) is provided for the forced rotation of the two swivel parts (4a, 4b) with respect to one another, **characterized in that** at least one direction of rotation measurement unit (13) is provided at the swivel (4) for determining the direction of twist of the rope (1) with respect to the swivel (4) and the rotary drive (5) is controllable by a control apparatus (15) in dependence on the determined direction of twist such that the swivel part (4b rotationally fixedly connected to the rope (1) is rotated in the direction of the determined direction of twist.

2. A swivel in accordance with the preceding claim, wherein a torque gauge (11) is provided for determining the torque induced by the rope twist at the swivel (4) and the rotary drive (5) is controllable by the control apparatus (15) in dependence on the determined torque, in particular such that the determined torque is brought toward zero by the forced rotation of the swivel parts (4a, 4b).

3. A swivel in accordance with the preceding claim, wherein the control apparatus (15) is configured such that, as the torque becomes increasingly larger, an increasingly larger forced rotation of the swivel parts (4a, 4b) relative to one another is performed, wherein the rotational rope stiffness of the respective installed rope 1 is preferably taken into account on the determination of the magnitude of the forced rotation to be carried out.

4. A swivel in accordance with one of the preceding claims, wherein the rotary drive is rotationally fixedly connected at an output element to one of the swivel parts (4b), on the one hand, and can be supported against rotation, on the other hand, by means of at least one torque support (14) at at least one abutment contour (16) at the other swivel part (4a), wherein the direction of rotation measurement unit (13) and/or the torque gauge (11) is/are associated with the named torque support (14) and/or with the named abutment contour (16).

5. A swivel in accordance with one of the claims 1 to 3, wherein the direction of rotation measurement unit (13) and/or the torque gauge (11) is/are integrated in a drive train of the rotary drive or is/are arranged between a connection piece (19) with which the rope (1) is rotationally fixedly connectable to one of the swivel parts (4b) and the named swivel part (4b).

6. A swivel in accordance with one of the preceding claims, wherein the rotary drive (5) can be supported against rotation in opposite directions of rotation by means of the at least one torque support (14) at at least two abutment contours (16) and the direction of rotation measurement unit (13) and/or the torque gauge (11) has/have a sensor element for each of the abutment contours (16).

7. A swivel in accordance with one of the preceding claims, wherein the rotary drive (5) can be held by a braking apparatus such that a torque introduced into the output side of the rotary drive (5) by the rope twist can be transmitted to the input side of the rotary drive (5) and/or can be converted into a rotational movement of the input side of the rotary drive (5).

8. A swivel in accordance with one of the preceding claims, wherein the rotary drive (5) with a drive housing is supported with at least limited rotatability with respect to a swivel part (4a) in particular arranged in a fixed position, wherein a braking apparatus is provided between the drive housing and the swivel part (4a) for braking the rotation of the drive housing with respect to the swivel part (4a) and/or an elastic restoring apparatus is provided for applying a restoring force which attempts to return the drive housing into a non-rotated starting position with respect to the swivel part (4a).

9. A swivel in accordance with the preceding claim, wherein the braking apparatus and/or restoring apparatus comprises a spring device (17).

10. A swivel in accordance with one of the preceding claims, wherein the rotary drive (5) is integrated in the swivel (4) and is in particular arranged in an inner space surrounded by a swivel part (4a).

11. A swivel in accordance with one of the preceding claims, wherein the control apparatus (15) comprises a twist compensator for the automatic compensation of a rope twist which may be present, wherein the named twist compensator comprises a control module for the automatic control of the rotary drive (5) in dependence on the direction of rotation of the rope twist of the rope (1) acting on the swivel (4) determined by the direction of rotation measurement unit (13) and/or in dependence on the torque at the swivel (4) determined by the torque gauge (11), wherein the named control module is configured such that the rotary drive (5) is actuated such that the torque detected by the torque gauge (11) is brought toward zero by the forced rotation of the swivel and/or a direction of rotation signal which can be output by the direction of rotation measurement unit (13) is absent.

12. A swivel in accordance with one of the preceding claims, wherein the direction of rotation measurement unit (13) and/or the torque gauge (11) is/are integrated in the swivel (4) and/or in the rotary drive (5), in particular in an inner space surrounded by a swivel part (4a).

13. A swivel in accordance with one of the preceding claims, wherein an angle of rotation measurement unit (12) is provided for determining the angle of rotation between the two swivel parts (4a, 4b).

14. A crane, in particular a tower crane, a mobile crane, a harbor mobile crane, a ship's crane or a vehicle boom crane having a swivel (4) in accordance with one of the preceding claims.

15. A crane in accordance with the preceding claim, wherein a hoist rope of the crane is attached with the swivel (4) to a boom (23) of the crane, wherein one of the swivel parts (4a) is rotationally fixedly connected to the boom (23).

## Revendications

1. Émerillon pour l'élimination de la torsion d'un câble (1), avec deux parties d'émerillon (4a, 4b), qui peuvent tourner l'une par rapport à l'autre dans la direction longitudinale du câble (1), et qui transmettent les forces de traction, un entraînement rotatif (5) étant prévu pour la rotation forcée des deux parties d'émerillon (4a, 4b) l'une par rapport à l'autre, **caractérisé en ce que**, sur l'émerillon (4), est prévu au moins un dispositif de mesure de sens de rotation (13) pour la détermination du sens de torsion du câble (1) par rapport à l'émerillon (4) et l'entraînement rotatif (5) peut être contrôlé par un dispositif de commande (15) en fonction du sens de torsion déterminé de façon à ce que la partie d'émerillon (4b) reliée de manière solidaire en rotation avec le câble (1) soit tournée dans la direction de torsion déterminée.

2. Émerillon selon la revendication précédente, un dispositif de mesure de couple (11) étant prévu pour la détermination du couple induit par la torsion du câble sur l'émerillon (4) et l'entraînement rotatif (5) pouvant être commandé par le dispositif de commande (15) en fonction du couple déterminé, plus particulièrement de façon à ce que le couple déterminé soit amené à zéro par la rotation forcée des parties de l'émerillon (4a, 4b).

3. Émerillon selon la revendication précédente, le dispositif de commande (15) étant conçu de façon à ce que, lorsque le couple augmente, une rotation forcée toujours plus importante des parties de l'émerillon (4a, 4b) entre elles est effectuée, de préférence la rigidité du câble monté 1 étant prise en compte lors de la détermination de la taille de la rotation forcée à effectuer.

4. Émerillon selon l'une des revendications précédentes, l'entraînement rotatif étant relié, d'une part de manière solidaire en rotation avec une des parties de l'émerillon (4b) et d'autre part peut s'appuyer, au moyen d'au moins un support de couple (14), contre au moins un contour de butée (16) sur l'autre partie de l'émerillon (4a) afin d'éviter une rotation, le dispositif de mesure de sens de rotation (13) et/ou le dispositif de mesure de couple (11) correspondant au support de couple (14) mentionné et/ou au contour de butée (16) mentionné.

5. Émerillon selon l'une des revendications 1 à 3, le dispositif de mesure de sens de rotation (13) et/ou le dispositif de mesure de couple (11) étant intégré dans une chaîne d'entraînement de l'entraînement rotatif ou étant disposé entre un élément de raccordement (19), avec lequel le câble (1) peut être relié de manière solidaire en rotation avec une des parties de l'émerillon (4b), et la partie de l'émerillon (4b) mentionnée.

6. Émerillon selon l'une des revendications précédentes, l'entraînement rotatif (5) pouvant s'appuyer, au moyen de l'au moins un support de couple (14), contre au moins deux contours de butée (16) afin d'empêcher la rotation dans le sens opposé et le dispositif de mesure de sens de rotation (13) et/ou le dispositif de mesure de couple (11) comprenant, pour chacun des contours de butée (16), un élément de capteur.

7. Émerillon selon l'une des revendications précédentes, l'entraînement rotatif (5) pouvant être immobilisé par un dispositif de freinage, de façon à ce que couple appliqué par la torsion du câble au côté de sortie de l'entraînement rotatif (5) puisse être transmis au côté d'entrée de l'entraînement rotatif (5) et/ou puisse être converti en un mouvement rotatif du côté d'entrée de l'entraînement rotatif (5).

8. Émerillon selon l'une des revendications précédentes, l'entraînement rotatif (5) étant logé de manière rotative au moins limitée, avec un boîtier d'entraînement, par rapport à une partie d'émerillon (4a) disposée de manière plus particulièrement fixe, un dispositif de freinage étant prévu entre le boîtier d'entraînement et la partie de l'émerillon (4a) pour le freinage de la rotation du boîtier d'entraînement par rapport à la partie de l'émerillon (4a) et/ou un dispositif de rappel élastique étant prévu pour l'application d'une force de rappel, qui tenter de ramener le boîtier d'entraînement dans une position initiale par rapport à la partie de l'émerillon (4a).

9. Émerillon selon l'une des revendications précédentes, le dispositif de freinage et/ou de rappel comprenant un dispositif de ressort (17).

10. Émerillon selon l'une des revendications précédentes, l'entraînement rotatif (5) étant intégré dans l'émerillon (4), plus particulièrement dans un espace interne entouré par une partie d'émerillon (4a).

11. Émerillon selon l'une des revendications précédentes, le dispositif de commande (15) comprenant un dispositif de compensation de torsion pour la compensation automatique d'une torsion de câble existant le cas échéant, le dispositif de compensation de torsion mentionné comprenant un composant de commande pour la commande automatique de l'entraînement rotatif (5) en fonction du sens de rotation (5), déterminé par le dispositif de mesure de sens de rotation (13), de la torsion du câble exercée par le câble (1) sur l'émerillon (4) et/ou en fonction du couple déterminé par le dispositif de mesure de couple (11) sur l'émerillon (4), le composant de commande mentionné étant conçu de façon à ce que l'entraînement rotatif (5) soit actionné de façon à ce que le couple déterminé par le dispositif de mesure de couple (11) soit amené à zéro et/ou un signal de sens de rotation pouvant être émis par le dispositif de mesure de sens de rotation (13) étant absent du fait de la rotation forcée de l'émerillon.

12. Émerillon selon l'une des revendications précédentes, le dispositif de mesure de sens de rotation (13) et/ou le dispositif de mesure de couple (11) étant intégré dans l'émerillon (4) et/ou l'entraînement rotatif (5), plus particulièrement sont disposés dans un espace interne entouré par une partie de l'émerillon (4a).

13. Émerillon selon l'une des revendications précédentes, un dispositif de mesure d'angle de rotation (12) est prévu pour la détermination de l'angle de rotation entre les deux parties de l'émerillon (4a), (4b).

14. Grue, plus particulièrement grue à tour, grue mobile, grue portuaire, grue de navire ou grue à flèche sur véhicule, avec un émerillon (4) selon l'une des revendications précédentes.

15. Grue selon la revendication précédente, l'émerillon (4) permettant d'accrocher un câble de levage de la grue à une flèche (23) de la grue, une des parties de l'émerillon (4a) étant fixée de manière solidaire en rotation à la flèche (23).
